Europäisches Patentamt

European Patent Office

Office Européen des brevets

(11) Veröffentlichungsnummer: **0 218 063 B1**

(12) **EUROPÄISCHE PATENTSCHRIFT**

(45) Veröffentlichungstag der Patentschrift:
02.01.91 Patentblatt 91/01

(21) Anmeldenummer: **86111553.3**

(22) Anmeldetag: **21.08.86**

(51) Int. Cl.⁵: **C08L 77/00, C08K 3/04**

(54) **Steife und hochzähe Polyamid-Formmassen.**

Die Akte enthält technische Angaben, die nach
dem Eingang der Anmeldung eingereicht
wurden und die nicht in dieser Patentschrift
enthalten sind.

(30) Priorität: 02.09.85 DE 3531269

(43) Veröffentlichungstag der Anmeldung:
15.04.87 Patentblatt 87/16

(45) Bekanntmachung des Hinweises auf die
Patenterteilung:
02.01.91 Patentblatt 91/01

(84) Benannte Vertragsstaaten:
BE DE FR GB IT NL

(56) Entgegenhaltungen:
DE-A- 2 140 041
FR-A- 1 456 177
FR-A- 2 452 511

(73) Patentinhaber: BASF Aktiengesellschaft
Carl-Bosch-Strasse 38
D-6700 Ludwigshafen (DE)

(72) Erfinder: Seiler, Erhard, Dr.
Erpolzheimer Strasse 1
D-6700 Ludwigshafen (DE)
Erfinder: McKee, Graham Edmund, Dr.
Kastanienweg 8
D-6940 Weinheim (DE)
Erfinder: Theysohn, Rainer, Dr.
Am Bruch 38
D-6710 Frankenthal (DE)

## Beschreibung

Es ist bekannt, die Schlagzähigkeit von Polyamiden durch Zusatz von kautschukelastischen Polymeren zu erhöhen. Hierdurch wird jedoch die Steifigkeit vermindert. Entsprechend der europäischen Patentanmeldung 125 483 ist es auch bekannt, Polyamide, die kautschukelastische Polymere enthalten mit verstärkenden Füllstoffen zu versehen, um deren Steifigkeit zu erhöhen. Durch den Zusatz von Füllstoffen wird jedoch wiederum die Schlagzähigkeit vermindert. Aus der GB-PS 12 29 456 ist es auch bekannt, Polyamide zum Zwecke der verbesserten elektrischen Leitfähigkeit mit oleophilem Graphit auszurüsten. Es hat sich jedoch herausgestellt, daß synthetischer Graphit ebenso wie andere Füllstoffe einen negativen Einfluß auf die Schlagzähigkeit hat.

In der FR-A 1 456 177 werden Formmassen aus linearen Polyamiden, Ethylen-Copolymeren und Ofenruß beschrieben, der hinsichtlich ihrer Festigkeit nicht voll zufrieden stellen.

Es war deshalb die technische Aufgabe gestellt, schlagzähe Polyamid-Formmassen zur Verfügung zu stellen, die sich durch hohe Steifigkeit, gute plastische Verformbarkeit sowie extrem bruch- und biegezähes Verhalten auszeichnen.

Diese Aufgabe wird gelöst durch steife hochzähe Polyamidformmassen, enthaltend

A 20 bis 90 Gew.-Teile mindestens eines linearen thermoplastischen Polyamids,

B 5 bis 50, vorzugsweise 10 bis 30 Gew.-Teile mindestens eines kautschukelastischen Polymerisats, das Carboxyl- und/oder latente Carboxylgruppen die sich von t-Butylacrylat und/oder t-Butylmethacrylat ableiten und/oder Säureanhydrid- und/oder (Meth)acrylsäureestergruppen, mit der Ausnahme von Gruppen, die sich von t-Butylacrylat oder t-Butylmethacrylat ableiten und/oder Säureamidgruppen enthält, mit einer Glasübergangstemperatur von unter −30°C

C 5 bis 30, vorzugsweise 5 bis 20 Gew.-Teile plättchenförmigen, natürlichen Graphit mit einer mittleren Teilchengröße von 0,1 bis 20 µm,

wobei sich die Summe der Gewichtsteile von A, B und C jeweils auf 100 Gew.-Teile ergänzen, sowie

D gegebenenfalls Zusatzstoffe in wirksamen Mengen.

Die neuen Formmassen haben den Vorteil, daß sie eine hohe Steifigkeit und hoher Schlagzähigkeit haben und sich durch ein extrem bruchsicheres und biegezähes Verhalten auszeichnen. Die neuen Formmassen eignen sich auch für die elektrostatische Lackierung, sind selbst antistatisch, und haben eine gute Wärmeleitfähigkeit. Ferner haben die Formmassen ein gutes plastisches Verformungsverhalten, ähnlich wie bei Blech, wobei eine hohe Verformungsenergie gespeichert wird, die mechanisch, z.B. durch Richten, rückstellbar ist. Die Formmassen zeichnen sich auch durch eine geringe Wasseraufnahme und gute Fließeigenschaften aus. Fertigteile aus diesen Formmassen haben eine gute Oberfläche.

Die neuen Formmassen sind insofern bemerkenswert, als mit keinem der gängigen Verstärkungsmittel, auch solchen mit plättchenförmigem Aufbau wie Talkum oder Glimmer, die Eigenschaftskombination der neuen Formmassen erreichbar ist.

Die erfindungsgemäßen thermoplastischen Formmassen enthalten als Komponente A 20 bis 90 Gew.-Teile, vorzugsweise 50 bis 85 Gew.-Teile mindestens eines linearen thermoplastischen Polyamids. Geeignet sind lineare Polyamide, z.B. mit einer relativen Viskosität von 2,2 bis 4,5, gemessen als 1 gew.%ige Lösung in 96 gew.%iger Schwefelsäure bei 23°C. Bevorzugt seien genannt: Polyamide, die sich von Lactamen mit 7 bis 13 Ringgliedern ableiten, wie Polycaprolactam, Polycapryllactam oder Polylaurinlactam sowie Polyamide, die durch Umsetzung von Dicarbonsäuren mit Diaminen erhalten werden. Geeignete Dicarbonsäuren, die auch in beliebigen Kombinationen einsetzbar sind, sind beispielsweise Alkandicarbonsäuren mit 6 bis 12 Kohlenstoffatomen, insbesondere 6 bis 10 Kohlenstoffatomen, Terephthalsäure und Isophthalsäure. Geeignete Diamine, die auch in beliebigen Kombinationen einsetzbar sind, sind beispielsweise Alkandiamine mit 6 bis 12 Kohlenstoffatomen, insbesondere 6 bis 8 Kohlenstoffatomen, ferner m-Xylylendiamin, Bis-(4-aminophenyl)-methan, Bis-(4-aminocyclohexyl)methan oder bis-(4-aminophenyl)propan-2,2. Es ist auch möglich, Mischungen der genannten Polyamide zu verwenden. Besondere technische Bedeutung haben Polyamid-6, Polyamid-66 sowie Polyamide, die aus Hexamethylendiamin und Isophthalsäure sowie Terephthalsäure aufgebaut sind, erlangt.

Als Komponente B enthalten die erfindungsgemäßen Formmassen 5 bis 50 Gew.-Teile, insbesondere 10 bis 30 Gew.-Teile, mindestens eines kautschukelastischen Polymeren, das Carboxyl- und/oder latente Carboxyl- und/oder Säureanhydrid- und/oder (Meth)acrylsäureester- und/oder Säureamidgruppen enthält, mit einer Glasübergangstemperatur Tg von unter −30°C.

Geeignete kautschukelastische Polymerisate sind z.B. aufgebaut aus Ethylen, Estern der (Meth)acrylsäure mit primären oder sekundären Alkoholen mit 2-8 C-Atomen und aus Monomeren, die Carbonsäuregruppen und/oder latente Carbonsäuregruppen und/oder Säureanhydrid- und/oder Säureamidgruppen enthalten. Beispiele für Monomere mit Carbonsäuregruppen sind Acrylsäure und Methacrylsäure, für Monomere mit Säureanhydridgruppen Maleinsäureanhydrid und für Monomere mit Säureamidgruppen (Meth)acrylamid. Die Monomeren mit latenten Carboxylgruppen sind t-Butylacrylat und t-Butylmethacrylat.

Besonders geeignete Polymerisate sind beispielsweise aufgebaut aus

a) 50 bis 79,5 Gew.% Ethylen

b) 20 bis 50 Gew.%, vorzugsweise 25 bis 38 Gew.% eines Esters der (Meth)acrylsäure mit primären oder sekundären $C_2$-$C_8$-Alkohole vorzugsweise n-Butylacrylat und/oder Ethylhexylacrylat und

c) 0,5 bis 10 Gew.% eines Carboxylgruppen und/oder latente Carboxylgruppen und/oder sowie Anhydridgruppen und/oder Säureamidgruppen enthaltenden Monomeren der vorgenannten Art.

Bevorzugte Ethylencopolymerisate haben einen Schmelzbereich von 40 bis 100°C. Die Copolymerisate sind im allgemeinen hochmolekular und haben einen Schmelzindex MFI 190/2,16 (DIN 53 735) von 4 bis 20.

Andere geeignete kautschukelastische Polymerisate sind in Emulsion herstellbar. Sie können einen homogenen sowie einen Kern-Schalen-Aufbau besitzen. Dabei ist es nötig, daß die Glastemperatur des Kerns und/oder die der Schale unter –30°C liegt. Beispiele für einsetzbare Monomere deren Polymere eine Glastemperatur von unter –30°C besitzen, sind Butadien, Isopren, n-Butylacrylat und Ethylhexylacrylat. Diese Monomere können mit anderen Monomeren copolymerisiert werden, sofern dabei die Glastemperatur des Copolymeren unter -30°C liegt. Beispiele für solche Comonomere sind Styrol, Acrylnitril, Vinylmethylether und Ester der (Meth)crylsäure wie z.B. Methylmethacrylat, Ethylacrylat und Methylacrylat. Weitere Comonomere sind solche mit zwei oder mehr olefinischen Doppelbindungen wie Butandioldiacrylat, Dihydrodicyclopentadienylacrylat und Divinylbenzol, die als Vernetzungsmittel wirken. Wichtig ist, daß sich an der Oberfläche der Kautschukteilchen mindestens ein Ester der Methacrylsäure und/oder Carboxylgruppen und/oder latente Carboxylgruppen und/oder Carbonsäureamidgruppen befinden. Beispiele für solche Monomere sind Methylmethacrylat, n-Butylacrylat, Acrylsäure, Methacrylsäure, t-Butylacrylat und (Meth)acrylamid. Diese Monomereinheiten können sich auch im Inneren der Kautschukteilchen befinden, da jedoch diese Gruppen eine Anbindung der Teilchen an das Polyamid bewirken sollen, ist es zweckmäßig, diese Monomeren, im letzten Teil der Polymerisation zuzugeben. Die Herstellung solcher Polymerer ist in US-PS 3 796 771, EP 1245, DOS 2 742 176, DOS 2 941 025, DOS 3 019 233, DOS 3 025 606, DOS 3 105 364, DOS 3 339 000 und DOS 3 313 919 beschrieben.

Typische Beispiele für solche kautschukelastische Polymerisate sind unten wiedergegeben. Sie stellen nur einen kleinen Teil der möglichen Variationen dar.

Dabei werden die folgenden Abkürzungen verwendet

| BU | = | Butadien |
|---|---|---|
| AS | = | Acrylsäure |
| MAS | = | Methacrylsäure |
| I | = | Isopren |
| MeAM | = | Methacrylamid |
| AM | = | Acrylamid |
| S | = | Styrol |
| AN | = | Acrylnitril |
| n-BA | = | n-Butylacrylat |
| MMA | = | Methylmethacrylat |
| t-BA | = | t-Butylacrylat |

EP 0 218 063 B1

| Kern | äußere Schale |
|---|---|
| Bu | Bu und/oder I copolymerisiert mit einem oder mehreren der folgenden Monomeren: AS, MAS, t-BA, MMA, n-BA, (Me)AM |
| Bu | MMA |
| Bu | nBA |
| Bu | MMA und/oder n-BA copolymerisiert mit einem oder mehreren der folgenden Monomeren: AS, MAS, t-BA, (Me)AM |
| Bu-n-BA-Copolymer | wie Bu *als Kern* |
| nBA | wie Bu " " |
| nBA + Vernetzungsmittel | wie Bu " " |
| I | wie Bu " " |
| Bu-S | wie Bu " " |
| Bu-AN | wie Bu " " |
| nBA-S | wie Bu " " |
| nBA-AN | wie Bu " " |

Weitere kautschukelastische Polymerisate bestehen aus Kautschuken mit einer Glasübergangstemperatur von weniger als –30°C, die mit (Meth)acrylsäure und/oder Säureanhydridgruppen wie Maleinsäureanhydrid gepfropft sind. Beispiele sind in der US-A 4 174 358 beschrieben. Als Kautschuke können Ethylen-Propylen-(Dien)-Copolymere, Polybutadien und Polyisopren verwendet werden.

Als Komponente C enthalten die erfindungsgemäßen Formmassen 5 bis 30 Gew.-Teile, insbesondere 5 bis 20 Gew.% plättchenförmigen natürlichen Graphit mit einer mittleren Teilchengröße von 0,1 bis 20 µm, vorzugsweise 0,2 bis 10 µm. Es versteht sich, daß sich in den erfindungsgemäßen Formmassen die Summe der Gewichtsteile der Komponenten A, B und C jeweils auf 100 Gew.-Teile ergänzen.

Gegebenenfalls enthalten die erfindungsgemäßen Formmassen als Komponente D übliche Zusatzstoffe und Hilfsmittel in einer Menge von z.B. 0 bis 15 Gew.%. Geeignete Zusatzstoffe und Hilfsmittel sind z.B. UV-, Wärme- und Hydrolyse-Stabilisatoren, Schmier-, Gleit- und Trennmittel und Flammschutzmittel.

Besonders bevorzugt wird die Stabilisierung mit Salzen des einwertigen Kupfers. Als Salze des einwertigen Kupfers kommen vorzugsweise Kupfer-I-acetat, Kupfer-I-chlorid, -bromid oder -iodid in Frage. Sie sind vorteilhaft in Mengen von 5 bis 500 ppm Kupfer, vorzugsweise 10 bis 250 ppm Kupfer, bezogen auf das Polyamid enthalten. Besonders vorteilhaft ist es, wenn das Kupfer in molekularer Verteilung in Polyamid vorliegt. Dies wird erreicht, wenn man der Formmasse ein Konzentrat zusetzt, das Polyamid, ein Salz des einwertigen Kupfers und ein Alkalihalogenid oder Erdalkalihalogenid in Form einer festen homogenen Lösung enthält. Ein typisches Konzentrat besteht z.B. aus 79 bis 95 Gew.% Polyamid und 21 bis 5 Gew.% eines Gemisches aus Kupferiodid oder -bromid und Kaliumiodid oder Calciumbromid.

Die Formmassen gemäß der Erfindung werden üblicherweise durch Mischen der Komponenten in üblichen für die Kunststoffverarbeitung geeigneten Mischvorrichtungen, z.B. Extrudern bei Temperaturen über dem Schmelzpunkt des Polyamids A, z.B. von 230 bis 290°C hergestellt, wobei gleichzeitig eine Feinverteilung des kautschukelastischen Polymerisats B und des Graphits (Komponente C) erfolgt. Vorteilhaft liegt das kautschukelastische Polymerisat in der fertigen Formmasse in einer Teilchengröße von 0,1 bis 20 µm vor.

Die erfindungsgemäßen Formmassen eignen sich zur Herstellung von Formteilen durch Spritzguß oder Extrusion. Insbesondere sind die erfindungsgemäßen Formmassen geeignet zur Herstellung von Kfz-Teilen wie z.B. Schürzen oder Stoßfängern.

Der Gegenstand der Erfindung sei an folgenden Beispielen veranschaulicht.

Beispiele

Ausgangsstoffe
- Polyamid 6 mit einer relativen Viskosität von 3,3 gemessen an einer 1 %igen Lösung in $H_2SO_4$ conc. bei 23°C

4

- Ethylen-n-Butylacrylat-Acrylsäure-Copolymer (61,5 : 34 : 4,5 Gewichtsverhältnis) mit einem Schmelzindex MFI 190/2,16 (DIN 53 735) von 10 g in 10 Minuten.
- Naturgraphit Typ 1 mit einem C-Gehalt zwischen 96 und 99,5 Gew.% und der folgenden Kornverteilung

55 Gew.% <2 μm
84 Gew.% <3 μm
95 Gew.% <4 μm
99 Gew.% <5 μm

- Naturgraphit Typ 2 mit einem C-Gehalt zwischen 95 und 99,98 Gew.% mit der folgenden Kornverteilung

3 Gew.% 2 μm
9 Gew.% 3 μm
20 Gew.% 4 μm
32 Gew.% 5 μm
75 Gew.% 10 μm

- Wollastonit AST 600 mittlere Teilchengröße 10 bis 50 μm
- Talkum mittlere Teilchengröße 2,5 bis 25 μm
- Kautschukelastisches Polymerisat aus

28,02 Gew.% n-Butylacrylat
0,18 Gew.% Methacrylsäure
1,80 Gew.% t-Butylacrylat
2,68 Gew.% Ethylacrylat
0,12 Gew.% Methacrylamid
67,2 Gew.% Butadien

hergestellt durch Emulsionspolymerisation, wobei als erste Stufe 67,2 Teile Butadien in Gegenwart von 0,67 Teilen t-Dodecylmercaptan als Regler polymerisiert wurden (innerer Kern) und als zweite Stufe (äußere Schale) 30 Gew.-Teile einer Mischung aus n-Butylacrylat, Methacrylsäure und t-Butylacrylat (93,4 : 0,6 : 6 Gewichtsverhältnis) aufpolymerisiert wurden.

Zwischen der ersten und zweiten Stufe erfolgt eine gezielte Agglomeration der ca. 0,1 μm großen Teilchen durch Zugabe von 4 Gew.% (fest bezogen auf fest) einer Ethylacrylat-Methacrylamid-Copolymerdispersion.

Teilchengröße 0,1 bis 0,7 μm
Feststoffgehalt ~50 %
Glasübergangstemperatur der äußeren Schale –40°C
Glasübergangstemperatur des inneren Kerns –80°C.

## Beispiele 1 bis 7

In einem ZSK 53-Zweiwellen-Extruder von Werner und Pfleiderer wurde eine Abmischung aus 78 Gew.-Teilen des Polyamids und 22 Gew.-Teilen des Ethylen-n-Butylacrylat-Acrylsäure-Copolymer hergestellt. In einem zweiten Durchgang durch den Extruder wurde diese Mischung mit Graphit, Wollastonit bzw. Talkum vermengt. Die Zusammensetzung dieser Abmischung sowie ihrer Eigenschaften sind in Tabelle 1 niedergelegt.

## Beispiele 8 bis 12

Das Polyamid wurde am Einzug eines ZSK 53-Extruders zugeführt und in einer ersten Schneckenzone plastifiziert und über eine Knetzone in eine zweite Schneckenzone gefördert, in der die wäßrige Dispersion des kautschukelastischen Polymerisats dosiert zugeführt wurde. Entlang des Extruders wurde das Wasser über Entgasungsstutzen als Dampf entfernt. Anschließend wurde die Formmasse als Strang ausgepreßt, abgekühlt und zerkleinert. Das Verhältnis Polyamid : Kautschuk (fest) betrug 78 : 22 (Gewichtsverhältnis).

In einem zweiten Durchgang durch einen ZSK 53-Extruder wurde dieses Vorprodukt ebenfalls mit Graphit, Wollastonit bzw. Talkum vermengt. Die Zusammensetzung der Produkte sowie ihre Eigenschaften sind in Tabelle 2 wiedergegeben.

Prüfung der Formmassen

Die folgenden Prüfungen wurden durchgeführt :

Reißfestigkeit nach DIN 53 455 bei 23°C mit einer Prüfgeschwindigkeit von 5 mm/Minute.

Lochkerbschlagzähigkeit nach DIN 53 753 bei –40°C.

Schädigungsarbeit nach DIN 53 443, Blatt 2 (Durchstoßversuch) an 2 mm Rundscheiben bei 23°C.

E-Modul nach DIN 53 457 bei 23°C.

Wasseraufnahme : Trockene 2 mm gespritzte Rundscheiben wurden gewogen und in mit Wasser gesättigter Luft bei 23°C gelagert. Zu verschiedenen Zeiten wurden die Rundscheiben gewogen und die Wasseraufnahme bestimmt.

Praxistest : An einer großflächig gespritzten Form mit einer Dicke von 4 mm wurde in einem Durchstoßversuch das Bruchverhalten bei –30°C bestimmt.

Einstaubverhalten wurde an 2 mm Rundscheiben durch Lagerung in freier Atmosphäre im Labor bestimmt.

EP 0 218 063 B1

Tabelle 1

Abmischungen von Polyamid und Ethylen-n-Butylacrylat-Acrylsäurecopolymer
(78:22 Gewichtsverhältnis) mit Füllstoffen

| Vers.-Nr. | Zusatz Gew.% | Reiß- festig- keit N/mm² 23°C | Lochkerb- schlag- zähigkeit kJ/m² -40°C | Schädigungs- arbeit Nm 23°C | E-Modul N/mm² | Wasseraufn. n. 30 Tagen bei 23°C Gew.% | Praxistest Bruchver- halten | Einstaub- verhalten |
|---|---|---|---|---|---|---|---|---|
| 1 | keine | 35 | 80 | 50 | 1.800 | 8,2 | Zähbruch | viel verstaubt |
| 2 | 5 Graphit 1 | 40 | 40 | 45 | 2.200 | 6,0 | " | wenig verstaubt |
| 3 | 7,5 Graphit 1 | 47 | 35 | 37 | 3.100 | 5,8 | " | " |
| 4 | 15 Graphit 1 | 52 | 25 | 35 | 3.900 | 5,3 | Sprödbruch | sehr wenig verstaubt |
| 5 | 7,5 Graphit 2 | 39 | 38 | 43 | 3.200 | 6,0 | Zähbruch | wenig verstaubt |
| 6* | 15 Wollastonit | 47 | 25 | 35 | 2.300 | 7,1 | Sprödbruch | verstaubt |
| 7* | 15 Talkum | 45 | 23 | 30 | 2.700 | 7,0 | " | " |

* Vergleichsbeispiele

## Tabelle 2

Abmischungen von Polyamid und Dispersionskautschuk
(78:22 Gewichtsverhältnis) mit Füllstoffen

| Vers.-Nr. | Zusatz Gew.% | | Reiß-festig-keit N/mm² 23°C | Lochkerb-schlag-zähigkeit kJ/m² -40°C | Schädigungs-arbeit Nm 23°C | E-Modul N/mm² | Wasseraufn. n. 30 Tagen bei 23°C Gew.% | Praxistest Bruchver-halten | Einstaub-verhalten |
|---|---|---|---|---|---|---|---|---|---|
| 1 | 0 | | 38 | 95 | 51 | 1.850 | 8.3 | Zähbruch | viel verstaubt |
| 2 | 5 | Graphit 1 | 41 | 43 | 47 | 2.210 | 6.1 | " | wenig verstaubt |
| 3 | 7,5 | Graphit 1 | 49 | 37 | 38 | 3.200 | 5.8 | " | " |
| 4 | 15 | Graphit 1 | 53 | 29 | 37 | 4.000 | 6.1 | Sprödbruch | " |
| 5* | 15 | Wollastonit | 48 | 27 | 36 | 2.400 | 7.2 | " | verstaubt |
| 6* | 15 | Talkum | 46 | 25 | 30 | 2.750 | 7.1 | " | " |

EP 0 218 063 B1

# EP 0 218 063 B1

## Ansprüche

1. Steife, hochzähe Polyamid-Formmassen, enthaltend

A 20 bis 90 Gew.-Teile mindestens eines linearen thermoplastischen Polyamids,

B 5 bis 50, vorzugsweise 10 bis 30 Gew.-Teile mindestens eines kautschukelastischen Polymerisats, das Carboxylgruppen und/oder latente Carboxylgruppen, die sich von t-Butylacrylat und/oder t-Butylmethacrylat ableiten und/oder Säureanhydrid- und/oder (Meth)-acrylsäurealkylestergruppen, mit Ausnahme der t-Butylacrylat- oder t-Butylmethacrylatgruppe und/oder Säureamidgruppen enthält, mit einer Glasübergangstemperatur von unter –30°C,

C 5 bis 30, vorzugsweise 5 bis 20 Gew.-Teile plättchenförmigen, natürlichen Graphit mit einer mittleren Teilchengröße von 0,1 bis 20 μm,

wobei sich die Summe der Gewichtsteile von A, B und C jeweils auf 100 Gew.-Teile ergänzen, sowie

D gegebenenfalls Zusatzstoffe in wirksamen Mengen.

2. Formmassen nach Anspruch 1, dadurch gekennzeichnet, daß sie als Komponente B ein Copolymerisat aus 50 bis 79,5 Gew.-% Ethylen, 20 bis 50 Gew.-% eines Esters der (Meth)acrylsäure mit einem primären oder Sekundären $C_2$-$C_8$-Alkohol, und 0,5 bis 10 Gew.-% eines Carboxylgruppen un/oder die genannten latenten Carboxylgruppen und/oder Säureanhydrid- und/oder Amidgruppen enthaltenden Monomeren enthalten.

3. Formmassen nach Anspruch 1, dadurch gekennzeichnet, daß Komponente B in Emulsion hergestellt worden ist.

4. Formmassen nach Anspruch 1, dadurch gekennzeichnet, daß die Komponente B aus einem Kautschuk mit einer Glastemperatur von unter –30°C besteht, welcher mit Carboxyl- und/oder den genannten latenten Carboxyl- und/oder Säureanhydrid- und/oder Säureamidgruppen gepfropft ist.

## Claims

1. A rigid, very tough polyamide molding material containing

A from 20 to 90 parts by weight of one or more linear thermoplastic polyamides,

B from 5 to 50, preferably from 10 to 30, parts by weight of one or more elastomeric polymers which contain carboxyl and/or latent carboxyl which are derived from tert-butyl acrylate and/or tert-butyl methacrylate, and/or anhydride and/or (meth)acrylate, but not tert-butyl acrylate or tert-butyl methacrylate, and/or amide groups and have a glass transition temperature of less than –30°C, and

C from 5 to 30, preferably from 5 to 20, parts by weight of tabular natural graphite having a mean particle size of from 0.1 to 20 μm,

the sum of the amounts of A, B and C being 100 parts by weight, and

D if required, additives in effective amounts.

2. A molding material as claimed in claim 1, which contains, as component B, a copolymer of from 50 to 79.5% by weight of ethylene, from 20 to 50% by weight of an ester of (meth)acrylic acid with a primary or secondary $C_2$-$C_8$- alcohol and from 0.5 to 10% by weight of a monomer containing carboxyl and/or the latent carboxyl mentioned and/or anhydride and/or amide groups.

3. A molding material as claimed in claim 1, wherein component B is prepared in emulsion.

4. A molding material as claimed in claim 1, wherein component B consists of a rubber which has a glass transition temperature of less than –30°C and is grafted with carboxyl and/or the latent carboxyl mentioned and/or anhydride and/or amide groups.

## Revendications

1. Masses à mouler en polyamide rigides et résistantes aux chocs, contenant

A de 20 à 50 parties en poids d'au moins un polyamide thermoplastique linéaire,

B de 5 à 50, de préférence 10 à 30, parties en poids d'un polymère caoutchouteux qui contient des groupements carboxyle et/ou des groupements carboxyle latents qui proviennent de l'acrylate de t-butyle et/ou du méthacrylate de t-butyle, et/ou des groupements anhydride d'acide et/ou (méth)acrylate d'alkyle, à l'exception des groupements acrylate de t-butyle ou méthacrylate de t-butyle, et/ou des groupements carboxamide, avec une température de transition vitreuse inférieure à –30°C,

C de 5 à 30, de préférence 5 à 20, parties en poids de graphite naturel lamellaire ayant une granulométrie moyenne de 0, 1 à 20μm,

9

la somme des parties en poids de A, B et C faisant à chaque fois 100 parties en poids, ainsi que

D éventuellement des additifs en quantités efficaces.

2. Masses à mouler selon la revendication 1, caractérisées en ce qu'elles contiennent comme composant B un copolymère de 50 à 79,5% en poids d'éthylène, de 20 à 50% en poids d'un ester d'acide (méth)acrylique avec un alcool en $C_2$-$C_8$ primaire ou secondaire, et de 0,5 à 10% en poids d'un monomère contenant des groupements carboxyle et / ou des groupements carboxyle latents indiqués ci-dessus et/ou des groupements anhydride et/ou carboxamide.

3. Masses à mouler selon la revendication 1, caractérisées en ce que le composant B a été préparé en émulsion.

4. Masses à mouler selon la revendication 1, caractérisées en ce que le composant B est constitué d'un caoutchouc ayant une température de transition vitreuse inférieure à –30°C, lequel est greffé de groupements carboxyle et/ou carboxyle latents mentionnés et/ou anhydride et/ou carboxamide.